Europäisches Patentamt

European Patent Office

Office européen des brevets

(19)

(11) Veröffentlichungsnummer: **0 039 832**

A1

(12) **EUROPÄISCHE PATENTANMELDUNG**

(21) Anmeldenummer: 81103216.8

(22) Anmeldetag: 29.04.81

(51) Int. Cl.³: **H 04 N 9/24**
H 01 J 31/20, H 01 J 29/80

(30) Priorität: 14.05.80 DE 3018453

(43) Veröffentlichungstag der Anmeldung:
18.11.81 Patentblatt 81/46

(84) Benannte Vertragsstaaten:
BE DE FR GB IT NL

(71) Anmelder: International Standard Electric Corporation
320 Park Avenue
New York New York 10022(US)

(84) Benannte Vertragsstaaten:
BE FR GB IT NL

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Weiss, Eberhard
Bopserwaldstrasse 18
D-7000 Stuttgart 1(DE)

(74) Vertreter: Thul, Leo, Dipl.-Phys.
Kurze Strasse 8 Postfach 300 929
D-7000 Stuttgart 30(DE)

(54) Farbfernseh-Bilddarstellung und Farbbildröhre.

(57) Bei einer Farbbildröhre liegen drei in vertikaler Richtung verlaufende Leuchtstoffstreifen unterschiedlicher Grundfarben (r, g, b) vor, deren Breite (B) mit der Breite von durch auf die Leuchtstoffstreifen auftreffenden Elektronen verursachten Leuchtflecken übereinstimmen. Die Farbbildröhre wird so betrieben, daß bei jedem Zeilenlauf, in vertikaler Richtung, jeweils nur ein Leuchtstoffstreifen, also nur eine Grundfarbe, erregt wird. In aufeinanderfolgenden Zeilenläufen läuft der Elektronenstrahl dagegen über jeweils einen Leuchtstoffstreifen, dessen Emissionsfarbe unterschiedlich von der Emissionsfarbe des zuvor oder anschließend erregten Leuchtstoffstreifens ist.

Fig.1

E.Weiss-15

Farbfernseh-Bilddarstellung und Farbbildröhre

Die Erfindung betrifft ein Verfahren zum Darstellen farbiger Bilder mittels einer Farbbildröhre.

Von derartigen Verfahren existiert eine größere Anzahl. Technisch durchgesetzt hat sich die Methode, bei der eine Farbbildröhre mit vertikal verlaufenden Leuchtstoffstreifen unterschiedlicher Emissionsfarbe, mit einem Elektronenstrahlerzeugungssystem, das drei in einer Ebene liegende Elektronenstrahlen aussendet, sowie mit einer Schattenmaske mit vertikal verlaufenden Schlitzen verwendet wird. Jeder der drei Elektronenstrahlen ist auf Grund der Ausblendung durch die Schattenmaske nur in der Lage, eine Art von Leuchtstoffstreifen, welche jeweils die Emissionsfarben Rot, Grün, Blau aufweisen zu treffen. Farben werden durch Steuern der Stromanteile der Elektronenstrahlen dargestellt.

Schon lange gehen Bestrebungen dahin, dieses Verfahren so zu vereinfachen, daß eine einfach aufgebaute Farbbildröhre, insbesondere eine solche, die ohne Schattenmaske und mit nur einem Elektronenstrahl arbeitet, benutzt werden kann. Vorgeschlagen worden sind Röhren, bei denen die dargestellte Farbe von der Beschleunigungsspannung des Elektronenstrahls abhängt, weiterhin Röhren bei denen ein Elektronenstrahl in horizontaler Richtung über vertikal angeordnete Leuchtstoffstreifen der Grundfarben Rot, Grün und Blau läuft, und der Elektronenstrahlstrom in Abhängigkeit von seinem jeweiligen Ort gesteuert wird. Zur Feststellung der jeweiligen Lage des Elektronenstrahles dienen sogenannte Indexstreifen. Weiterhin ist aus der

Dr. J/Sam
7.3.1980

./.

E.Weiss-15

DE-OS 25 23 524 eine Kathodenstrahlröhre bekannt, bei der Leuchtstoffstreifen der Grundfarben Rot, Grün und Blau horizontal verlaufen und durch drei horizontal verlaufende Elektronenstrahlen zur Emission angeregt werden. Alle bisher bekannten Verfahren zum Darstellen farbiger Bilder mittels einer Farbbildröhre, die keine Schattenmaske aufweist, haben sich wegen verschiedener Nachteile nicht gegen das Verfahren durchsetzen können, bei dem die bekannte Farbbildröhre mit vertikal verlaufenden Leuchtstoffstreifen, einer Schattenmaske und drei Elektronenstrahlen verwendet wird.

Der Erfindung liegt die Aufgabe zugrunde, ein vereinfachtes Verfahren zum Darstellen farbiger Bilder mittels einer Farbbildröhre anzugeben. Dieses Verfahren soll von den Merkmalen Gebrauch machen, die sich schon aus physikalischen oder technischen Gründen als besonders vorteilhaft erwiesen haben, es soll sich daher um ein Verfahren drehen, bei dem eine Farbbildröhre verwendet wird, mit einem Elektronenstrahlerzeugungssystem und mit einem Leuchtschirm mit einer Folge jeweils dreier bei Elektronenstrahlanregung Licht unterschiedlicher Grundfarben emittierender Leuchtstoffgebiete, welcher Leuchtschirm durch einer vertikale Folge im wesentlichen horizontaler Zeilenläufe abgerastert wird, während der der Strahlstrom zur Einstellung von Hell-Dunkel-Kontrasten variiert wird.

Die Lösung dieser Aufgabe ist durch den ersten Patenanspruch gegeben. Dieses Verfahren läßt sich mit jeder bisher bekannten Farbbildröhre durchführen. Seine außerordentlichen Vorteile zeigen sich jedoch erst dann, wenn eine Farbbildröhre gemäß einem oder mehrererder Unteransprüche verwendet wird. Eine solche vorteilhafte Farbbildröhre weist einen Leuchtschirm mit

E.Weiss-15

einer Folge jeweils dreier, gleich breiter, im wesentlichen horizontal verlaufender Leuchtstoffstreifen auf, deren Abstand und Breite dem Zeilenabstand entspricht. Ein solcher Leuchtschirm ist überaus einfach herstellbar. Der Aufbau der Farbbildröhre ist sehr einfach, da die Röhre ohne Schattenmaske und mit nur einem Elektronenstrahl auskommt.

Während seines horizontalen Laufes über die horizontal liegenden Leuchtstoffstreifen darf der Elektronenstrahl nicht vom jeweiligen Leuchtstoffstreifen nach oben oder unten hin abweichen. Um die vertikale Lage des Elektronenstrahles zu synchronisieren wird daher in an und für sich bekannter Weise außerhalb des optisch benutzten Bereichs des Leuchtschirms eine vertikal verlaufende kammförmige Elektrode angebracht, auf die der Elektronenstrahl bei seinem Zeilenlauf auftrifft, wodurch ein Steuerpuls erzeugt wird, dessen Größe vom Abweichen des Elektronenstrahls von der Zeilensollage abhängt. Gemäß der gemessenen Abweichung wird der Elektronenstrahl wieder auf Sollage korrigiert.

Dadurch, daß anstatt wie bei bisherigen Farbbildverfahren mittels Farbbildröhren üblich, pro Elektronenstrahlzeile nur noch eine Grundfarbe statt aller drei dargestellt wird, leidet bei größeren Leuchtschirmformaten die Farbauflösung des dargestellten Bildes. Das Verfahren erweist sich daher erst dann als besonders vorteilhaft, wenn es auf Farbbildröhren mit kleiner Leuchtschirmdiagonale, insbesondere einer solchen kleiner 20" angewendet wird.

Andere vorteilhafte Weiterbildungen und Ausführungsformen sind in weiteren Unteransprüchen angegeben.

E.Weiss-15

Die Erfindung wird im folgenden anhand von durch drei Figuren veranschaulichten Ausführungsbeispielen näher erläutert.  Es zeigen:

Fig. 1   Prinzipbild eines Leuchtschirms, wie er sich zur Anwendung des erfindungsgemäßen Verfahrens eignet;. mit kammförmigen,vertikalen Elektroden an den Seitenrändern des Leuchtschirms.

Fig. 2   Vorteilhafte Ausführungsform der Zähne einer kammförmigen Elektrode gemäß Figur 1 .

a) korrekte Lage eines Elektronenstrahls beim Auftreffen auf einen Zahn

b) nach unten von der Sollage abweichender Elektronenstrahl

c) nach oben von der Sollage abweichender Elektronenstrahl

Fig. 3   an einem Widerstand R gemäß Figur 1 abgegriffene Spannung beim Auftreffen eines Elektronenstrahles auf den Zahn einer kammförmigen Elektrode bei verschiedenen Lagen des Elektronenstrahls.

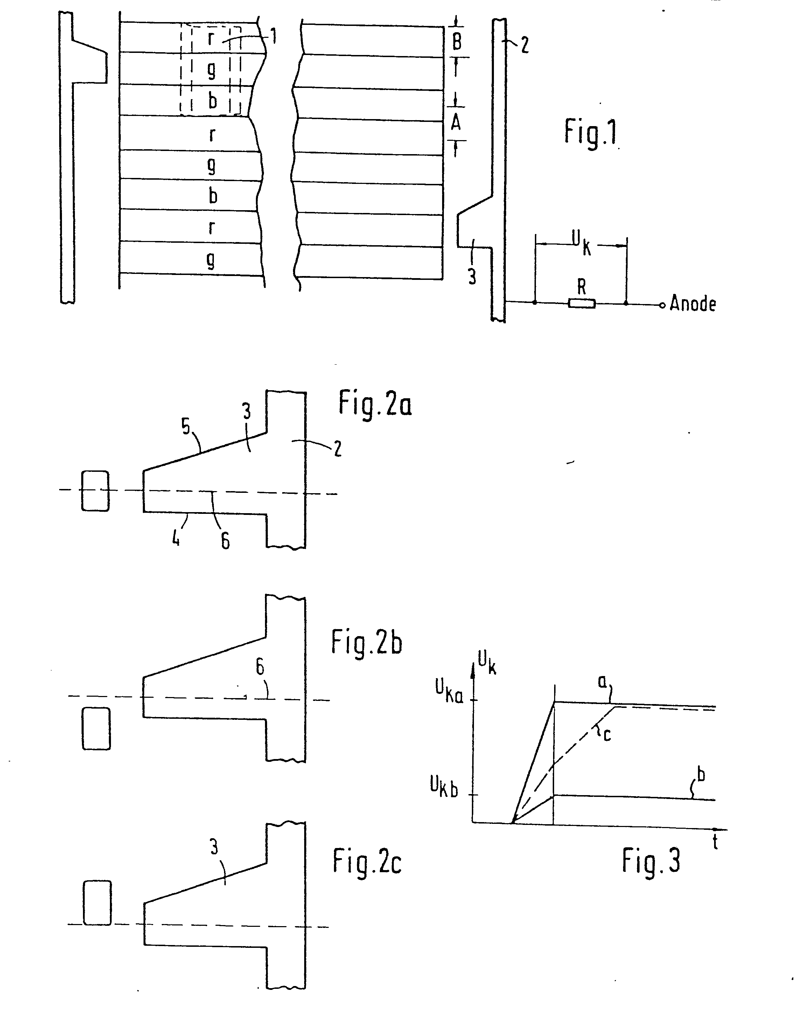

In Figur 1 sind mit r, g, b horizontal liegende Leuchtstoffstreifen bezeichnet, welche bei Anregung durch Elektronenstrahlen mit roter, bzw. grüner, bzw. blauer Farbe leuchten. Genau genommen laufen diese Leuchtstoffstreifen, wie auch die über die Leuchtstoffstreifen abgelenkten Elektronenstrahlen nicht exakt horizontal, sondern sie fallen leicht vom linken zum rechten Rand hin.  Dies rührt davon her, daß der Elektronenstrahl während  er von links nach rechts abgelenkt wird gleichzeitig eine geringe Verschiebung von oben nach unten erfährt. Innerhalb von 1/25 Sekunde wird der Elektronenstrahl von ganz

./.

E.Weiss-15

oben nach ganz unten abgelenkt und schreibt in dieser Zeit 625 Zeilen. Innerhalb von etwa 580 Zeilen wird Bildinformation übertragen. Da bei einer Farbbildröhre, welche vom erfindungsgemäßen Verfahren Gebrauch macht jeder Elektronenstrahlzeile ein Leuchtstoffstreifen entspricht, bedeutet dies, daß auf dem Leuchtschirm etwa 580 Leuchtstoffstreifen untereinander anzuordnen sind. Bei einer Röhre mit einer Bildschirmdiagonalen von 14" ergibt sich eine Leuchtschirmhöhe von etwa 190 mm, sodaß für die 580 Leuchtstoffstreifen jeweils etwa 300 µm zur Verfügung stehen. Der Abstand der Elektronenstrahlzeilen, damit der Abstand A der Leuchtstoffstreifen und die Breite B der Leuchtstoffstreifen betragen in diesen Beispiel also jeweils etwa 300 µm.

Im folgenden wird das erfindungsgemäße Farbdarstellverfahren erläutert. Ein Elektronenstrahl laufe z.B. von links nach rechts über den in Figur 1 ganz oben eingezeichneten Leuchtstoffstreifen r. Nach Beendigung seines Zeilenlaufes wird der Elektronenstrahl sprunghaft vom rechten zum linken Bildrand abgelenkt und beginnt erneut einen Lauf von links nach rechts, nunmehr über den Leuchtstoffstreifen b, welcher als übernächster Streifen unter dem Leuchtstoffstreifen r eingezeichnet ist. Der Leuchtstoffstreifen g wird zunächst nicht getroffen, da beim genormten Farbbildverfahren in zwei Halbbildern jeweils nur jede übernächste Zeile geschrieben wird. Nach Beendigung des Schreibensbeider Halbbilder sind alle Zeilen abgerastert.

Wie andere Farbbildverfahren, so beruht auch das erfindungsgemäße Verfahren darauf, daß alle dargestellten Farben durch Anteile der Grundfarben Rot Grün und Blau erzeugt werden. Zu einem bestimmten Farbfleck 1 gehörende Leuchtflecke der Grundfarben

./.

E.Weiss-15

Rot, Grün und Blau dürfen nicht zu weit voneinander entfernt liegen, wenn das Auge die Farbmischung richtig vornehmen soll, und nicht die Einzelfarben erkennen darf. Es hat sich dabei bisher gezeigt, daß die Zentren von drei Leuchtflecken der Grundfarben nicht mehr als etwa 500 µm voneinander entfernt sein dürfen, um die vorgenannte Bedingung zu erfüllen. Da im vorliegenden Fall die Leuchtstoffstreifen, und damit zu einem Farbfleck 1 gehörige Leuchtflecke der drei Grundfarben nur 300 µm voneinander entfernt liegen, ist die geforderte Bedingung zu ausreichende Farbauflösung erfüllt.

Wenn als Grundfarben diejenigen Farben für Rot, Grün und Blau verwendet werden, die ihre Farbart nach für den Empfang von Farbfernsehprogrammen genormt sind, so können auch bei Anwendung des erfindungsgemäßen Verfahrens die bisher in Farbfernsehgeräten üblichen Schaltungen fast unverändert verwendet werden. Der einzige Unterschied besteht darin, daß nicht mehr in jeder Zeile die Leuchtstoffstreifen aller drei Grundfarben, sondern in jeder Zeile nur noch ein Leuchtstoffstreifen einer Grundfarbe angeregt wird, und daß die Wiederholung der Anregung einer bestimmten Grundfarbe erst in jedem vierten Zeilenlauf erfolgt.

Bei Anwendung des erfindungsgemäßen Verfahrens ist es unbedingt erforderlich, daß der Elektronenstrahl bei seinem horizontalen Zeilenlauf nicht nach oben oder unten von dem jeweiligen Leuchtstoffstreifen, über den der Elektronenstrahl gerade läuft, abweicht. Daher ist es notwendig, die vertikale Lage des Elektronenstrahles genau einzustellen und von Zeit zu Zeit zu überwachen. Dazu können z.B. vertikal verlaufende kammförmige Elektroden dienen, wie sie in Figur 1 am rechten und linken

./.

E.Weiss-15

Rand des Leuchtschirmes eingezeichnet und mit 2 bezeichnet sind. Die Funktion der Zähne 3 dieser Elektroden 2 wird in Figur 2 verdeutlicht. Auf die Zähne 3 dieser kammförmigen Elektrode trifft der Elektronenstrahl am Ende oder am Anfang seines Zeilenlaufes auf und erzeugt eine Korrekturspannung $U_k$, welche zur Feststellung einer Abweichung des Elektronenstrahls von seiner Sollage und gegebenenfalls zu einer Korrektur benutzt wird. Zum Feststellen der Korrekturspannung $U_k$ wird die kammförmige Elektrode 2 im wesentlichen über einen Widerstand R mit der Anodenspannungsquelle des Fernsehgerätes verbunden. Eine genaue Schaltung ist selbstverständlich aufwendiger, jedoch für die vorliegende Erfindung unerheblich.

In Figur 2 ist eine vorteilhafte Ausführungsform eines Zahnes 3 einer kammförmigen Elektrode 2 dargestellt. Die untere Begrenzung 4 des Zahnes verläuft horizontal in Zeilenrichtung, während die obere Begrenzung 5 schräg dazu verläuft. Der Zahn weist mindestens die Breite B eines Leuchtstoffstreifens, bzw. Zeilenabstandes auf. Figur 2a stellt einen Auftrefffleck dar, der von einem Elektronenstrahl erzeugt wird, der in der gestrichelt angedeuteten Sollage 6 auf den Zahn 3 läuft. Bei Figur 2b weicht der Elektronenstrahl nach unten von der Sollage 6 und bei Figur 2c nach oben von der Sollage ab.

In Figur 3 ist der zeitliche Verlauf der Korrekturspannung $U_k$, wie sie am Widerstand R abgegriffen wird, unter der Voraussetzung der verschiedenen Auftrefflagen des Elektronenstrahles gemäß den Figuren 2a - c dargestellt. Gemäß Figur 2a trifft der Elektronenstrahl bei seinem Zeilenlauf nach rechts mit der Breite A seines Auftrefflecks 1 auf die Breite A des Zahnes 3 auf. Die Spannung $U_k$ steigt schnell an und bleibt dann

./.

E.Weiss-15

konstant auf einem Maximalwert $U_{ka}$. Im Fall gemäß Figur 2b, wo der Elektronenstrahl von der Sollage nach unten abweicht, trifft der Auftrefffleck nie mit seiner vollen Ausdehnung A auf den Zahn 3 auf. Die abgegriffene Spannung $U_{kb}$ ist erheblich kleiner als die im Fall des vollen Auftreffens gemessene Spannung $U_{ka}$. Im Falle des Abweichens des Elektronenstrahles von der Sollage nach oben, wie es in Figur 2c gezeichnet ist, steigt die abgegriffene Spannung $U_k$ konstant an, da die obere Begrenzung des Zahnes 3 in Zeilenrichtung ansteigend verläuft, und daher der Auftrefffleck immer größere Gebiete des Zahnes 3 überdeckt. Durch den Verlauf der Spannung läßt sich also die Strahlabweichung in ihrer Richtung d.h. nach oben oder nach unten festlegen, während der Wert der abgegriffenen Spannung ein Maß für die Größe der Abweichung ist. Aus der Größe der Korrekturspannung $U_k$ wird eine weitere Spannung gewonnen, welche der Vertikalablenkung für den Elektronenstrahl zugeführt wird, und welche die Sollage des Elektronenstrahls einstellt.

Die vertikale Lage des Elektronenstrahles ist selbstverständlich nicht bei jedem Zeilenlauf zu überwachen. Es genügt vielmehr, z.B. nur am Rand von jeder zehnten Zeile einen Zahn an der kammförmigen Elektrode anzubringen, und damit die Elektronenstrahlabweichung zu messen. Es ist jedoch vorteilhaft, die Vertikallage des Elektronenstrahles zumindest am oberen Bildrand festzustellen, bevor der Elektronenstrahl auf die erste Zeile läuft. Dazu weist die kammförmige Elektrode vorteilhafterweise schon einen Zahn auf, welcher über dem ersten Leuchtstoffstreifen liegt.

Die Herstellung einer Farbbildröhre zur Anwendung des erfindungsgemäßen Verfahrens weicht praktisch nicht von der

./.

E.Weiss-15

Herstellung einer herkömmlichen Farbbildröhre mit Leuchtstoffstreifen ab. Es werden ebenfalls durch Licht aushärtbare Leuchtstoffsuspensionen durch eine Schattenmaske hindurch belichtet,
welche Schattenmaske jedoch im Gegensatz zu den bisher üblichen
Farbbildröhren nicht vertikal verlaufende, sondern horizontal
verlaufende Schlitze aufweist, und welche Schattenmaske nicht
fest in der Glaswanne, welche den Leuchtschirm trägt verankert
ist, sondern welche Schattenmaske am zweckmäßigsten auf der
Belichtungsvorrichtung befestigt ist. Eine mit einer Leuchtstoffsuspension versehene Glaswanne ist dann einfach auf die
Belichtungsvorrichtung aufzulegen, ohne daß es notwendig ist,
eine Schattenmaske vor dem Aufbringen der Suspension aus der
Glaswanne zu entfernen und die Schattenmaske vor dem Belichten
wieder in die Glaswanne einzusetzen. Die Herstellung des
Leuchtschirms gestaltet sich dadurch besonders einfach.

Wie beschrieben liegt der besondere Vorteil des erfindungsgemäßen Verfahrens darin, daß es die Verwendung einer besonders
einfachen und damit billig herstellbaren Farbbildröhre erlaubt.
Wegen der Tatsache, daß pro Elektronenstrahlzeile nur noch eine
Leuchtstoffstreifenart, und nicht Leuchtstoffstreifen
dreier Grundfarben gleichzeitig angeregt werden, ist die Farbauflösung, welche mit den erfindungsgemäßen Verfahren erzielbar
ist, geringer als bei bisher bekannten Verfahren. Bei kleinen
Farbbildröhren, insbesondere solchen mit einer Bildschirmdiagonale kleiner 20" ist diese verringerte Farbauflösung nicht
mehr wahrnehmbar.

E.Weiss-15

Patentansprüche:

1) Verfahren zum Darstellen farbiger Bilder mittels einer Farbbildröhre ohne Schattenmaske, mit einem Elektronenstrahlerzeugungssystem und mit einem Leuchtschirm mit einer Folge jeweils dreier bei Elektronenstrahlanregung Licht unterschiedlicher Grundfarben emittierender Leuchtstoffgebiete, welcher Leuchtschirm durch einer vertikale Folge im wesentlichen horizontaler Zeilenläufe abgerastert wird, während der der Strahlstrom zur Einstellung von Hell-Dunkel-Kontrasten variiert wird, d a d u r c h   g e k e n n z e i c h n e t, daß bei jedem Zeilenlauf nur Leuchtstoffgebiete einer Emissionsfarbe angeregt werden, und daß von Zeile zu Zeile Leuchtstoffgebiete von zu den in den beiden vorigen Zeilenläufen angeregten Leuchtstoffemissionsfarben unterschiedlicher Emissionsfarbe vom Elektronenstrahl angeregt werden.

2) Farbbildröhre zum Darstellen farbiger Bilder mittels eines Verfahrensnach Anspruch 1, d a d u r c h   g e k e n n z e i c h n e t, daß der Leuchtschirm eine Folge jeweils dreier, gleich breiter, im wesentlichen horizontal verlaufender Leuchtstoffstreifen (r,g,b) aufweist, deren Abstand (A) und Breite (B) dem Zeilenabstand entspricht.

3) Farbbildröhre nach Anspruch 2, d a d u r c h   g e k e n n z e i c h n e t, daß die Grundfarben die Farben Rot, Grün und Blau jeweils der Farbart sind, die für den Empfang von Farbfernsehprogrammen genormt sind.

Dr. J/Sam
7.3.1980

./.

E.Weiss-15

4) Farbbildröhre nach Anspruch 2 oder 3,
d a d u r c h   g e k e n n z e i c h n e t, daß außerhalb
des optisch genutzten Bereichs des Leuchtschirms an dessen
rechtem und/oder linkem Rand eine vertikalverlaufende kammförmige Elektrode (2) angebracht ist, auf die der Elektronenstrahl bei seinem Zeilenlauf auftrifft, wodurch ein Steuerpuls erzeugt wird, dessen Größe von der Abweichung des Elektronenstrahls von der Zeilensollage abhängt, und daß entsprechend der Abweichung der Vertikalablenkung ein Signal
zur Korrektur der Abweichung zugeführt wird.

5) Farbbildröhre nach Anspruch 4,
d a d u r c h   g e k e n n z e i c h n e t, daß die Zähne
(3) der kammförmigen Elektrode (2) eine in Zeilenrichtung
verlaufende horizontale (5) Begrenzung und eine schräg verlaufende Begrenzung (6) aufweisen, daß die geringste Breite
der Zähne dem Zeilenabstand entspricht, und daß die  Zähne
(3) im Abstand mehrerer Zeilen angebracht sind.

6) Farbbildröhre nach einem der vorangehenden Ansprüche,
d a d u r c h   g e k e n n z e i c h n e t, daß die Leuchtschirmdiagonale kleiner 20" ist.

0039832

Fig.1

B

A

r
g
b
r
g
b
r
g

1

2

3

$U_k$

R

Anode

Fig.2a

5

3

2

4

6

Fig.2b

6

Fig.2c

3

$U_k$

$U_{ka}$

a

c

$U_{kb}$

b

t

Fig.3

P 30 18 453.3

E. Weiss - 15
12 · S · 80

**0039832**
Nummer der Anmeldung

EP 81103216.8

## EUROPÄISCHER RECHERCHENBERICHT

Europäisches Patentamt

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| X | DE - B - 926 734 (N.V. PHILIPS) <br><br> + Fig. 1-3; Seite 2, Zeilen 45-66, Zeile 94 - Seite 3, Zeile 18; Seite 4, Zeilen 13-31; Seite 5, Ansprüche 4-6 <br><br> ---- | | 1-5 | H 04 N 9/24 <br> H 01 J 31/20 <br> H 01 J 29/80 |

**RECHERCHIERTE SACHGEBIETE (Int. Cl.³)**

H 04 N 9/00
H 01 J 29/00
H 01 J 31/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | |
|---|---|---|
| Recherchenort <br> WIEN | Abschlußdatum der Recherche <br> 30-07-1981 | Prüfer <br> BENISCHKA |

EPA form 1503.1  06.78